# EUROPEAN PATENT APPLICATION

(11) **EP 4 749 362 A1**
(43) Date of publication of application: **27.05.2026**
(21) Application number: 25760721.8
(22) Date of filing: 05.02.2025
(51) Int. Cl.: G03B 17/17, G02B 5/08, G02B 5/04, G03B 30/00

(54) **REFLECTIVE FILM, FOLDING ELEMENT, CAMERA MODULE, AND ELECTRONIC DEVICE**

(30) Priority: 01.03.2024 CN 202410239066
(71) Applicant: HUAWEI TECHNOLOGIES CO., LTD., Shenzhen 518129 (CN)
(72) Inventor: ZHENG, Xiaowen, Shenzhen, Guangdong 518129 (CN); KAWAJI, Munenori, Shenzhen, Guangdong 518129 (CN); MIYATANI, Sota, Shenzhen, Guangdong 518129 (CN); WU, Zhikun, Shenzhen, Guangdong 518129 (CN); NIU, Yajun, Shenzhen, Guangdong 518129 (CN)
(74) Representative: Körber, Martin Hans
(86) International application number: PCT/CN2025/075760
(87) International publication number: WO 2025/180177

(57) **Abstract**

A reflective film (60), a folding element (11), a camera module (10), and an electronic device (100) are provided. The folding element (11) includes a prism (50) and a plurality of reflective films (60). The prism (50) has a plurality of non-total internal reflection surfaces, and one reflective film (60) is disposed on each non-total internal reflection surface. Any two reflective films (60) have a same quantity of film stacks. Along a path of light passing through the plurality of non-total internal reflection surfaces, in two adjacent reflective films (60), an i^{th} film stack from the prism (50) to air in one reflective film (60) is configured to reflect light with a center wavelength of λ1, and an n^{th} film stack from the prism (50) to the air in the other reflective film (60) is configured to reflect light with a same center wavelength of λ2. λ1 and λ2 are the same, and the i^{th} film stack and the n^{th} film stack have a same optical thickness. A reflectance of each film stack for reflected light with a center wavelength is greater than or equal to 80%, and refractive indexes of two adjacent film layers in each film stack are different. The folding element (11) is used to reduce a size of a camera module (10).

## Description

This application claims priority to Chinese Patent Application No. 202410239066.X, filed with the China National Intellectual Property Administration on March 1, 2024 and entitled "REFLECTIVE FILM, FOLDING ELEMENT, CAMERA MODULE, AND ELECTRONIC DEVICE", which is incorporated herein by reference in its entirety.

### TECHNICAL FIELD

Embodiments of this application relate to the field of optical imaging technologies, and in particular, to a reflective film, a folding element, a camera module, and an electronic device.

### BACKGROUND

Camera modules have become indispensable functional components in electronic products such as mobile phones, tablets, notebook computers, and wearable devices. As electronic devices become more lightweight, thinner, and more multifunctional, the camera modules on the electronic devices also gradually develop to be miniaturized and thin. However, image shooting effect and requirements are expected to be as high as those of single-lens reflex cameras, and functional effect and a size of the camera module gradually become one of important features of the electronic device. The camera module includes a lens assembly and an image sensor. The lens assembly usually includes a plurality of lenses sequentially arranged along an optical axis direction. Light passes through the lens assembly and then is projected onto the image sensor to implement photoelectric conversion, thereby allowing for imaging. In a related technology, the camera module uses a "periscope" design to implement a long focal length, to meet a requirement for long-distance shooting. However, the periscope camera module is large in size, which increases difficulty in miniaturizing the electronic device.

### SUMMARY

Embodiments of this application provide a reflective film, a folding element, a camera module, and an electronic device, to reduce a size of the camera module and difficulty in miniaturizing the electronic device.

A first aspect of this application provides a reflective film, including a plurality of film stacks that are stacked. Optical thicknesses of two adjacent film stacks are different. The two adjacent film stacks are configured to reflect light with different center wavelengths, and a reflectance of each film stack for reflected light with a center wavelength is greater than or equal to 80%. Each film stack includes a plurality of film layers that are stacked, and refractive indexes of two adjacent film layers are different. In this way, the reflective film may reflect the light with different center wavelengths by using different quantities of film stacks, so that reflectances for the light with different center wavelengths of the reflective film can be improved.

In a possible implementation, an absolute value of a difference between the refractive indexes of the two adjacent film layers in at least one film stack is greater than or equal to 0.6. In this way, when a quantity of film layers is fixed, the reflectance of the film stack for the reflected light may be further improved, helping improve the reflectance of the reflective film for the light.

In a possible implementation, the reflectance of each film stack for the reflected light with the center wavelength is greater than or equal to 98%, to further improve the reflectance of the reflective film for the light, thereby further improving a transmittance.

In a possible implementation, a refractive index of each film layer in the at least one film stack is greater than or equal to 1.6. In this way, the reflectance of the film stack for the reflected light can be improved.

In a possible implementation, a refractive index of each film layer in the at least one film stack is less than 1.6. In this way, the reflectance of the film stack for the reflected light can be improved.

In a possible implementation, a refractive index of a part of the film layers in the at least one film stack is greater than or equal to 1.6, and a refractive index of the other part of the film layers is less than 0.6. In this way, the reflectance of the film stack for the reflected light can be improved.

In a possible implementation, a thickness of a film layer that is in the at least one film stack and whose refractive index is greater than or equal to 1.6 is greater than or equal to 80 nm and less than or equal to 150 nm. In this way, when the quantity of film layers is fixed, the reflectance of the film stack can be further improved.

In a possible implementation, a thickness of a film layer that is in the at least one film stack and whose refractive index is less than 1.6 is greater than or equal to 100 nm and less than or equal to 180 nm. In this way, when the quantity of film layers is fixed, the reflectance of the film stack can be further improved.

In a possible implementation, at least two film stacks each include two film layers with different refractive indexes. In this way, a structure of the film stack can be simplified, helping reduce stacking difficulty of the film stack.

In a possible implementation, optical thicknesses of any two film stacks are different. In this way, a quantity of film stacks can be reduced, helping reduce a thickness of the reflective film.

In a possible implementation, the reflective film is a dielectric film.

In a possible implementation, the reflective film is a metal film.

In a possible implementation, the reflective film is a metal-dielectric film, and the metal-dielectric film includes a metal layer and a dielectric layer that includes the plurality of film stacks.

In a possible implementation, a reflectance of each film stack for light with another center wavelength other than light with a corresponding center wavelength is less than 80%.

In a possible implementation, a reflectance of each film stack for light with another center wavelength other than the light with the corresponding center wavelength is less than 50%.

A second aspect of this application provides a folding element, including a prism and a plurality of reflective films according to any one of the first aspect. The prism has a plurality of non-total internal reflection surfaces configured to reflect light, and one reflective film is disposed on each non-total internal reflection surface. Any two reflective films have a same quantity of film stacks. Along a path of light passing through the plurality of non-total internal reflection surfaces, in two adjacent reflective films, an i^{th} film stack from the prism to air in one reflective film is configured to reflect light with a center wavelength of λ1, and an n^{th} film stack from the prism to the air in the other reflective film is configured to reflect light with a same center wavelength of λ2, where λ1 and λ2 are the same, and the i^{th} film stack and the n^{th} film stack have a same optical thickness. i+n=m+1, i≤m, n≤m, i, n, and m are all positive integers, and m is the quantity of film stacks in each reflective film.

The reflective film is coated on the non-total internal reflection surface that does not meet a total internal reflection condition, so that total internal reflection can be implemented on the non-total internal reflection surface. In this way, the prism performs total internal reflection on light a plurality of times, thereby reducing a size of the prism and further reducing a size of the folding element. In addition, total internal reflection is implemented through the reflective film, so that a total internal reflection angle of the prism can be decoupled from the total internal reflection angle. In this way, the prism can perform total internal reflection on light for multiple times at any angle, thereby achieving a high transmittance and reducing a size of the prism.

In addition, on the path of the light passing through the plurality of non-total internal reflection surfaces, two adjacent reflective films complement each other, so that an optical path difference of light with different center wavelengths that passes through all non-total internal reflection surfaces is zero or decreases, thereby improving the transmittance and mitigating or eliminating dispersion. Complementation means that the two adjacent reflective films have a same quantity of film stacks, a same composition of the film stacks, reverse arrangement orders of the film stacks relative to the prism, and the like.

In a possible implementation, the prism has an even number of non-total internal reflection surfaces. In this case, an optical path difference of light with different center wavelengths after passing through all the non-total internal reflection surfaces is zero, so that the dispersion can be eliminated.

In a possible implementation, each reflective film is a dielectric film. In this way, dispersion is eliminated and a high transmittance is achieved, and further the size of the folding element can be reduced.

In a possible implementation, each reflective film is a metal film. In this way, dispersion is eliminated and a high transmittance is achieved, and further the size of the folding element can be reduced.

In a possible implementation, the reflective film is a metal-dielectric film, and the metal-dielectric film includes a metal layer and a dielectric layer located between the metal layer and the prism. In this way, when the prism at any angle has an even or odd number of non-total internal reflection surfaces, the dispersion may be mitigated or eliminated by using an absorption characteristic of a metal material of the metal layer, and a high transmittance can be achieved.

A third aspect of this application provides a camera module, including an image sensor, a lens, and the folding element according to any one of the second aspect. The lens and the image sensor are disposed on a same side of the folding element, or the lens and the image sensor are respectively disposed on two opposite sides of the folding element.

Because the folding element includes a prism at any angle and a reflective film, the folding element has a high transmittance and a small size, so that a size of the camera module can be reduced, thereby reducing difficulty in miniaturizing an electronic device.

A fourth aspect of this application provides an electronic device, including a housing and the camera module according to the third aspect, where the camera module is mounted in the housing.

### BRIEF DESCRIPTION OF DRAWINGS

FIG. 1 is a cross-sectional view of a camera module in a related technology;
FIG. 2A is a diagram of reflecting light by a prism through an odd number of reflection surfaces in a related technology;
FIG. 2B is a diagram of reflecting light by a prism through an even number of reflection surfaces in a related technology;
FIG. 3 is a diagram of a structure of an electronic device according to an embodiment of this application;
FIG. 4 is a diagram of a structure of a camera module according to an embodiment of this application;
FIG. 5 is a diagram of a structure of another camera module according to an embodiment of this application;
FIG. 6 is a cross-sectional diagram of a reflective film according to an embodiment of this application;
FIG. 7 is a diagram of a structure of a folding element according to an embodiment of this application;
FIG. 8 is a diagram of a structure of another folding element according to an embodiment of this application;
FIG. 9 is a diagram of reflectance curves for different centers of a first reflective film in FIG. 7;
FIG. 10 is a diagram of reflectance curves for different center wavelengths of a second reflective film; and
FIG. 11 is a cross-sectional diagram of another reflective film according to an embodiment of this application.

Reference numerals:
100: electronic device;
10: camera module; 11: folding element; 12: lens; 13: image sensor;
20: housing;
30: speaker opening;
40: data interface;
50: prism; 51: first non-total internal reflection surface; 52: second non-total internal reflection surface; 53: total internal reflection surface;
60: reflective film; 60A: first reflective film; 60B: second reflective film;
61: first film stack; 62: second film stack; 63: third film stack; 64: fourth film stack;
65: dielectric layer; 66: metal layer;
c1: blue light; c2: green light; c3: yellow light; c4: red light.

### DESCRIPTION OF EMBODIMENTS

Terms used in embodiments of this application are merely used to explain specific embodiments of this application, but are not intended to limit this application.

For ease of understanding, related technical terms in embodiments of this application are first explained and described.

Dispersion: is a phenomenon that polychromatic light is decomposed into monochromatic light to form a spectrum.

Transmittance: In a process in which incident light flux enters from an irradiated surface or an incident surface of a dialectic and exits another surface, a ratio of a radiation energy that is projected onto an object and transmitted through the object to a total radiation energy projected onto the object is defined as a transmittance of the object.

Center wavelength: is a wavelength corresponding to a center of a spectral distribution curve. For example, a wavelength range of red light is 760 nm to 622 nm, and a center wavelength is 660 nm; or a wavelength range of green light is 577 nm to 492 nm, and a center wavelength is 550 nm.

Optical thickness: A geometric thickness of a dielectric multiplied by a refractive index of the dielectric is referred to as the optical thickness. The geometric thickness indicates a physical thickness or an actual thickness of the dielectric.

Total internal reflection: also known as total reflection (total internal reflection, TIR), is an optical phenomenon. When light enters a dielectric with a low refractive index from a dielectric with a high refractive index, if an incident angle is greater than a critical angle (the light is far away from a normal), refracted light disappears, and all incident light is reflected instead of entering the dielectric with a low refractive index.

Group delay effect: This mainly manifests that light with different frequencies correspond to different refractive indexes. Therefore, in a same film system, reflectances and reflection depths for different light differ.

Optical path (optical path): is a basic concept in the optical field. It is defined as a product of a geometrical path of light propagation and a refractive index of a dielectric.

Optical path difference (optical path difference): is a difference between optical paths of two beams.

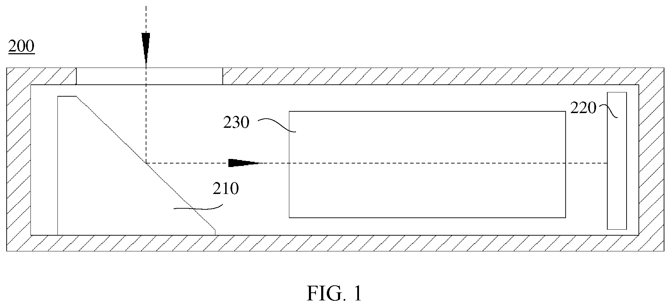

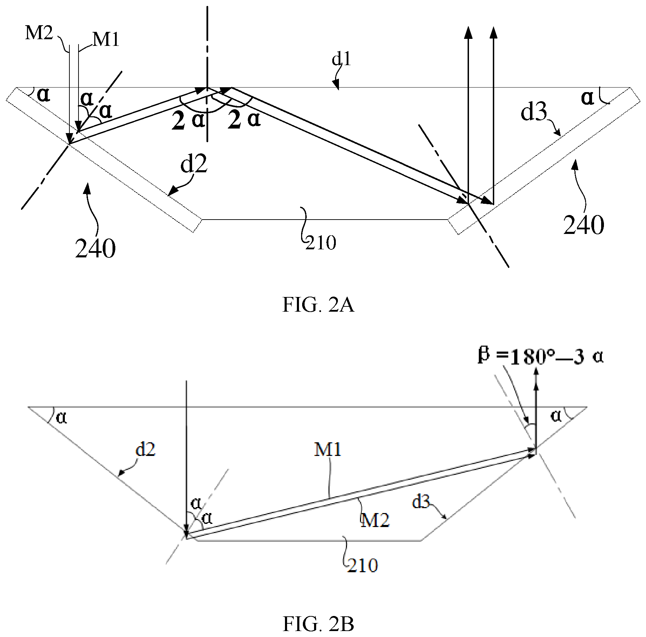

FIG. 1 is a cross-sectional view of a camera module in a related technology. FIG. 2A is a diagram of reflecting light by a prism through an odd number of reflection surfaces in a related technology. FIG. 2B is a diagram of reflecting light by a prism through an even number of reflection surfaces in a related technology.

In the related technology, as shown in FIG. 1, a periscope camera module 200 includes a prism 210, an image sensor 220, and a lens assembly 230. The lens assembly 230 is disposed between the prism 210 and the image sensor 220, and the lens assembly 230 includes a plurality of lenses that are arranged in parallel, to implement a long-focus design and meet a requirement for long-distance shooting. However, the periscope camera module 200 is large in size, which increases difficulty in miniaturizing an electronic device.

To reduce difficulty in miniaturizing the electronic device, in an implementation, the size of the periscope camera module 200 may be reduced through multiple reflections of the prism 210. The prism 210 has a plurality of reflection surfaces configured to reflect light, and a total reflective film 240 (as shown in FIG. 2A) is coated on a reflection surface that does not meet a total internal reflection condition, so that a size of the prism 210 may be smaller, thereby reducing the size of the periscope camera module 200, and further reducing difficulty in miniaturizing the electronic device.

As shown in FIG. 2A, the prism 210 has three reflection surfaces: a total internal reflection surface d1, a first non-total internal reflection surface d2, and a second non-total internal reflection surface d3. The light meets the total internal reflection condition on the total internal reflection surface d1, so that the total reflective film 240 does not need to be coated on the total internal reflection surface d1. The light does not meet the total internal reflection condition on the first non-total internal reflection surface d2 and the second non-total internal reflection surface d3. Therefore, the total reflective film 240 is coated on both the first non-total internal reflection surface d2 and the second non-total internal reflection surface d3, so that the light is totally reflected on the first non-total internal reflection surface d2 and the second non-total internal reflection surface d3. However, the total reflective film 240 is a dielectric film having group delay effect, so that light with different center wavelengths is reflected at different depths of the total reflective film 240 (as shown by M1 and M2 in FIG. 2A). Therefore, optical paths of the light with different center wavelengths are different after the light passes through the total reflective film 240, and further, there is an optical path difference between the light with different center wavelengths through the total reflective film 240. In this way, after the light is reflected in the prism 210 for an odd number of times, there is an optical path difference between light with different center wavelengths that leaves from the prism 210, so that the light with different center wavelengths that leaves from the prism 210 does not overlap each other, leading to dispersion. As a result, one of the first non-total internal reflection surface d2 and the second non-total internal reflection surface d3 forms a red edge, and the other forms a blue edge.

In another implementation, as shown in FIG. 2B, the prism 210 has two reflection surfaces: a first non-total internal reflection surface d2 and a second non-total internal reflection surface d3. The light does not meet the total internal reflection condition on the first non-total internal reflection surface d2 and the second non-total internal reflection surface d3. Therefore, a total reflective film 240 (not shown in FIG. 2B) is coated on both the first non-total internal reflection surface d2 and the second non-total internal reflection surface d3, so that the light is totally reflected on the first non-total internal reflection surface d2 and the second non-total internal reflection surface d3. The total reflective film 240 is a dielectric film, and light with different center wavelengths (as shown by M1 and M2 in FIG. 2B) has an optical path difference on two reflection surfaces. It can be learned from FIG. 2B that, when the light with different center wavelengths that leaves the prism 240 overlaps each other, dispersion does not occur. In this case, β=α, and β=180°-3α=α, that is, α=45°. When α≠45°, β≠α. In this case, the light with different center wavelengths that leaves the prism 240 does not overlap each other, and the dispersion occurs. Therefore, after the light is reflected for an even number of times in the prism 210, if an angle of the prism 210 is not equal to 45°, the dispersion occurs.

In view of this, embodiments of this application provide a reflective film 60, a folding element 11, a camera module 10, and an electronic device 100. The folding element 11 includes a prism 50 and the reflective film 60. The prism 50 has a plurality of reflection surfaces, and the reflective film 60 is coated on a non-total internal reflection surface in the plurality of reflection surfaces, so that light is totally reflected on the non-total internal reflection surface, and the reflective film 60 does not need to be coated on a total internal reflection surface. Along a path of light passing through all reflection surfaces, two adjacent reflective films 60 complement each other, so that the prism 50 has a high transmittance at any angle, and further dispersion can be mitigated or eliminated. This reduces a size of the camera module 10, reducing difficulty in miniaturizing the electronic device 100.

The electronic device 100 may include but is not limited to a device having the camera module 10, such as a mobile phone, a tablet computer, a notebook computer, an ultra-mobile personal computer (ultra-mobile personal computer, UMPC), a handheld computer, a walkie-talkie, a netbook, a POS machine, a personal digital assistant (personal digital assistant, PDA), a wearable device, a virtual reality device, or a vehicle-mounted apparatus.

In this embodiment of this application, for example, the electronic device 100 is a mobile phone. The mobile phone may be a bar-type phone or a foldable phone. The following uses an example in which the electronic device 100 is a bar-type phone for description.

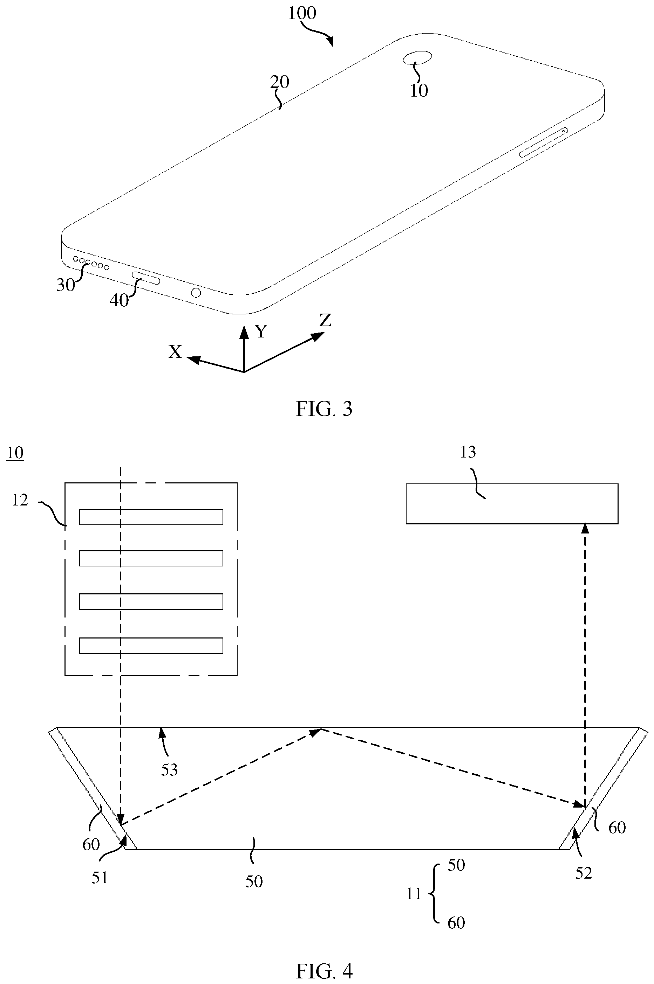

FIG. 3 is a diagram of a structure of an electronic device according to an embodiment of this application.

Refer to FIG. 3. The electronic device 100 includes a display, a housing 20, and a camera module 10. The camera module 10 may be mounted in the housing 20, and the camera module 10 is configured to implement a photographing function. The display is mounted in the housing 20, and is configured to display information such as a text and an image.

The camera module 10 may be located on a front side (a side that has the display) of the electronic device 100, and is configured to take a selfie or photograph another object. Alternatively, with reference to FIG. 3, the camera module 10 may be located on a rear side (a side that backs the display) of the electronic device 100, and is configured to photograph another object, or certainly may also be configured to take a selfie.

There may be one or more camera modules 10, to meet different photographing requirements.

The electronic device 100 may further include another structural member. For example, still with reference to FIG. 3, a speaker opening 30 may be further provided in the housing 20 of the electronic device 100. The speaker opening 30 may be configured to play audio or the like of the electronic device 100. Still refer to FIG. 3. A data interface 40 may be further provided in the housing 20 of the electronic device 100. The data interface 40 may be configured to supply power to the electronic device 100. Alternatively, the data interface 40 may be configured to connect the electronic device 100 to a headset, an external multimedia device (for example, an external camera or an external projection device), or the like.

Certainly, in some other examples, the electronic device 100 may further include another structural member, for example, a sensor, a processor, a circuit board, and a drive structure, to complete a function of the electronic device 100. The structural member is not limited in this embodiment of this application.

FIG. 4 is a diagram of a structure of a camera module according to an embodiment of this application.

As shown in FIG. 4, the camera module 10 includes an image sensor 13, a lens 12, and a folding element 11. The folding element 11 is configured to fold an optical axis, so that the camera module 10 is in a periscope architecture. The folding element 11 is configured to receive incident light. The incident light is totally reflected a plurality of times inside the folding element 11 before leaving the folding element 11, and is received by a light-sensitive surface (which may also be referred to as an imaging surface) of the image sensor 13, to implement imaging. The incident light is totally reflected a plurality of times through the folding element 11, so that a size of the folding element 11 can be further reduced, achieving a smaller size of the camera module 10. In this case, the folding element 11 has a high transmittance for the incident light, and can mitigate or eliminate dispersion.

The image sensor 13 may be a charge-coupled device (charge-coupled device, CCD), or may be a complementary metal oxide semiconductor (complementary metal oxide semiconductor, CMOS). Alternatively, the image sensor 13 may be another device that can implement a photoelectric conversion function.

The lens 12 may include one or more lenses. This is not specifically limited herein.

It should be noted that the camera module 10 may further include another device. For example, the camera module 10 may further include a lens tube, a light filter, or the like. The lens tube is configured to accommodate the image sensor 13, the light filter, the lens 12, or the like.

As shown in FIG. 4, the lens 12 and the image sensor 13 are disposed on a same side of the folding element 11. In this case, the folding element 11 is configured to: receive incident light emitted from the lens 12 and project the incident light onto the light-sensitive surface of the image sensor 13.

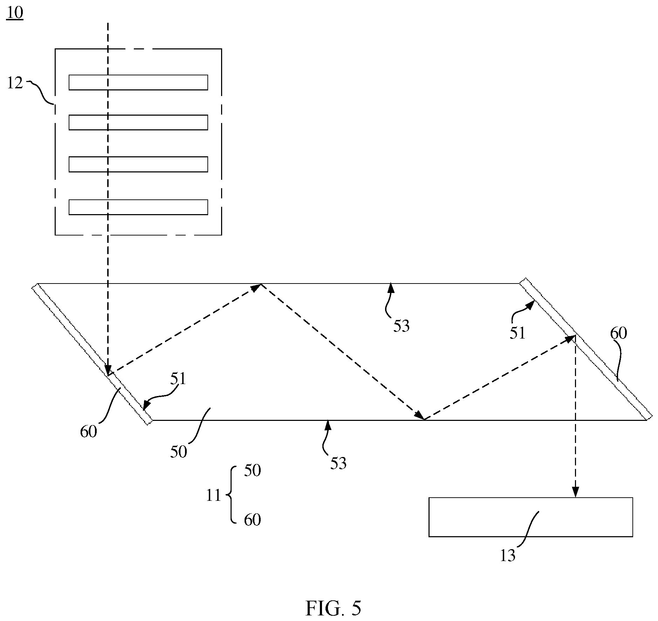

However, in some implementations, the image sensor 13 and the lens 12 may alternatively be respectively disposed on two opposite sides of the folding element 11, as shown in FIG. 5. FIG. 5 is a diagram of a structure of another camera module according to an embodiment of this application.

In this embodiment of this application, a folding element 11 includes a prism 50 and a plurality of reflective films 60. The prism 50 has a plurality of non-total internal reflection surfaces configured to reflect light, and one reflective film 60 is disposed on each non-total internal reflection surface. It can be learned that the reflective film 60 is in a one-to-one correspondence with the non-total internal reflection surface. For example, as shown in FIG. 4, there are two reflective films 60, and correspondingly, there are two non-total internal reflection surfaces. Each reflective film 60 is a dielectric film.

A specific structure of the prism 50 is not limited herein. In some implementations, as shown in FIG. 4, the prism 50 may be an isosceles trapezoid. In some other implementations, as shown in FIG. 5, the prism 50 may alternatively be a parallel quadrilateral.

In some implementations, the prism 50 may have an even number of non-total internal reflection surfaces. For example, as shown in FIG. 4, the prism 50 has two non-total internal reflection surfaces, and correspondingly, there are two reflective films 60. Certainly, a quantity of non-total internal reflection surfaces may alternatively be greater than two, for example, 4, 6, or 8.

In some other implementations, the prism 50 may alternatively have an odd number of non-total internal reflection surfaces. For example, the prism 50 may have three non-total internal reflection surfaces. Certainly, a quantity of non-total internal reflection surfaces may alternatively be greater than three, for example, 5, 7, or 9.

The prism 50 further has a total internal reflection surface 53, and there may be one or more total internal reflection surfaces 53. For example, as shown in FIG. 4, there is one total internal reflection surface 53. Alternatively, as shown in FIG. 5, there are two total internal reflection surfaces 53.

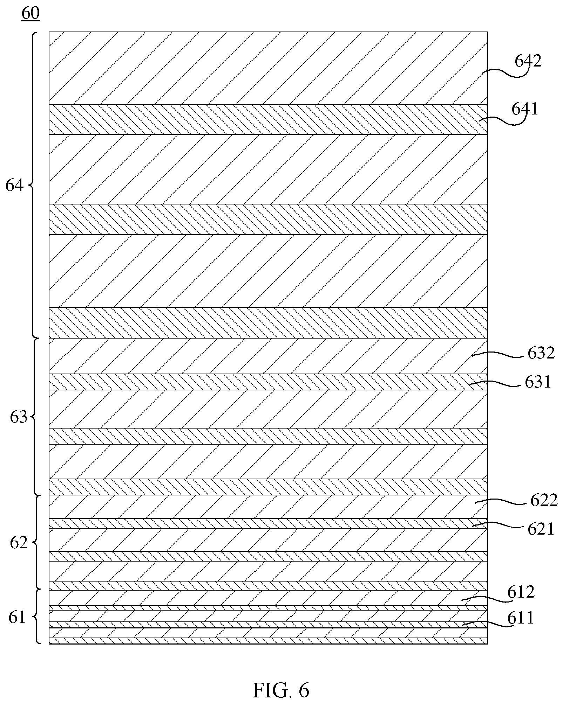

FIG. 6 is a cross-sectional diagram of a reflective film according to an embodiment of this application.

Refer to FIG. 6. Each reflective film 60 includes a plurality of film stacks that are stacked. Optical thicknesses of two adjacent film stacks are different. The two adjacent film stacks are configured to reflect light with different center wavelengths, and a reflectance of each film stack for reflected light with a center wavelength is greater than or equal to 80%. Each film stack includes a plurality of film layers that are stacked, and refractive indexes of two adjacent film layers are different. In this case, the reflective film 60 may reflect the light with different center wavelengths by using different quantities of film stacks, so that reflectances of the reflective film 60 for the light with different center wavelengths can be improved, thereby achieving high optical efficiency, and dispersion of the prism 50 can also be mitigated or eliminated.

For example, as shown in FIG. 6, the reflective film 60 includes four film stacks, and the four film stacks include a first film stack 61, a second film stack 62, a third film stack 63, and a fourth film stack 64 that are stacked. Certainly, a quantity of film stacks may alternatively be greater than or less than four.

For example, as shown in FIG. 6, the film stack may include six film layers that are stacked. Certainly, a quantity of film layers in the film stack may alternatively be greater than or less than six.

In this embodiment of this application, in addition to reflecting light with a corresponding center wavelength, each film stack also reflects light with another center wavelength, and a reflectance for the light with another center wavelength is less than 80%. For example, as shown in FIG. 6, when reflecting blue light c1 with a center wavelength of 440 nm, the first film stack 61 also reflects red light c4, green light c2, yellow light c3, and other light with center wavelengths. Reflectances of the first film stack 61 for the red light c4, green light c2, yellow light c3, and other light with center wavelengths may be less than 50%.

A reflectance of each film stack for the light with another center wavelength other than the light with a corresponding center wavelength may include but is not limited to 20%, 30%, 40%, 50%, 55%, 60%, 70%, or the like.

In some implementations, the reflectance of each film stack for the light with another center wavelength other than the light with a corresponding center wavelength may be less than 50%. In this way, a transmittance of each film stack for the light with another center wavelength other than the light with a corresponding center wavelength can be improved. It is ensured that the reflective film 60 totally reflects light with various center wavelengths through different quantities of film stacks.

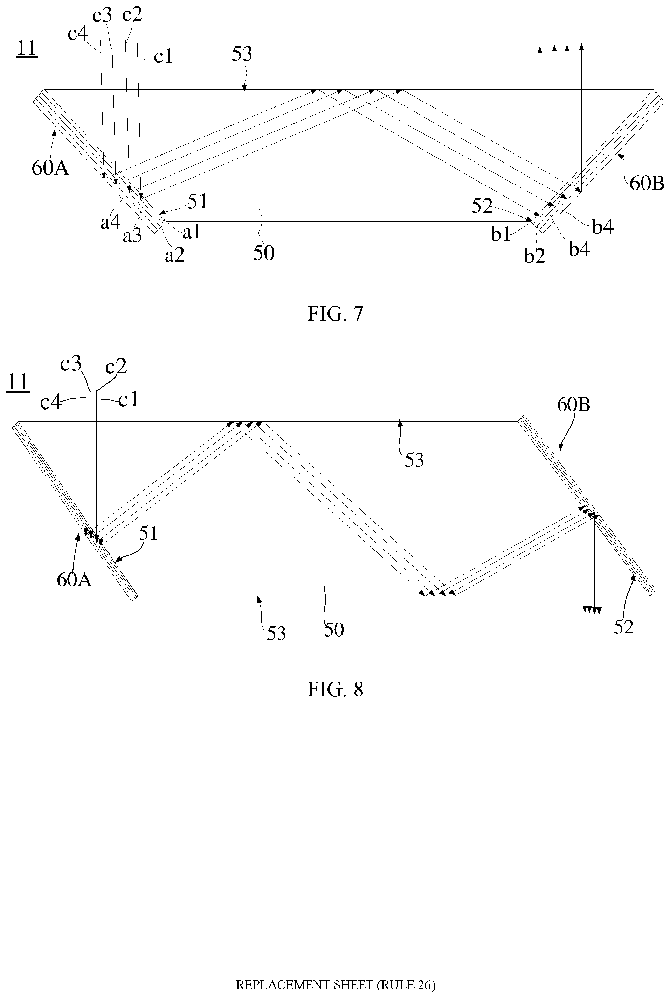

FIG. 7 is a diagram of a structure of a folding element according to an embodiment of this application. FIG. 8 is a diagram of a structure of another folding element according to an embodiment of this application.

Refer to FIG. 7. Along a path (for example, solid lines with arrows in FIG. 7 or FIG. 8) of light passing through a plurality of non-total internal reflection surfaces, two adjacent reflective films 60 complement each other, so that a prism 50 has a high transmittance at any angle, and dispersion can be mitigated or eliminated. Complementation means that the two adjacent reflective films 60 have a same quantity of film stacks, a same composition of the film stacks, reverse arrangement orders of the film stacks relative to the prism 50, and the like. The same composition of the film stacks may be understood as that a same type, arrangement manner, thickness, quantity, and the like of film layers in two film stacks with a same optical thickness.

Specifically, any two reflective films 60 have a same quantity of film stacks. Along the path (for example, the solid lines with arrows in FIG. 7 or FIG. 8) of the light passing through the plurality of non-total internal reflection surfaces, in the two adjacent reflective films 60, an i^{th} film stack from the prism 50 to air in one reflective film 50 is configured to reflect light with a center wavelength of λ1, an n^{th} film stack from the prism 50 to the air in the other reflective film 60 is configured to reflect light with a same center wavelength of λ2, and λ1 and λ2 are the same. In other words, the i^{th} film stack from the prism 50 to the air in one reflective film 60 and the n^{th} film stack from the prism 50 to the air in the other reflective film 60 are configured to reflect the light with a same center wavelength. The i^{th} film stack and the n^{th} film stack have a same optical thickness and a same composition. i+n=m+1, i≤m, n≤m, i, n, and m are all positive integers, and m is a quantity of film stacks in each reflective film 60. In this arrangement, the two adjacent reflective films 60 complement each other, so that the prism 50 has a high transmittance at any angle, and dispersion can be mitigated or eliminated.

The following describes a complementary characteristic of the two adjacent reflective films 60 by using an example.

For example, as shown in FIG. 7, the prism 50 has two non-total internal reflection surfaces and one total internal reflection surface 53. Light enters the prism 50 through the total internal reflection surface 53, and then is reflected in sequence by the first non-total internal reflection surface 51, the total internal reflection surface 53, and the second non-total internal reflection surface 52 before leaving prism 50 through the total internal reflection surface 53.

Still refer to FIG. 7. Along a path of light passing through all non-total internal reflection surfaces in the prism 60, a first reflective film 60A is adjacent to a second reflective film 60B. A first reflective film 60A is disposed on the first non-total internal reflection surface 51, and the first reflective film 60A includes four film stacks that are stacked. In the four film stacks, a first film stack a1 is closest to the first non-total internal reflection surface 51, and a fourth film stack a4 is farthest from the first non-total internal reflection surface 51. A second reflective film 60B is disposed on the second non-total internal reflection surface 52, and the second reflective film 60B includes four film stacks that are stacked. In the four film stacks, a first film stack b1 is closest to the second non-total internal reflection surface 52, and a fourth film stack b4 is farthest from the second non-total internal reflection surface 52.

The first film stack a1 in the first reflective film 60A and the fourth film stack b4 in the second reflective film 60B are configured to reflect light with a same center wavelength. A second film stack a2 in the first reflective film 60A and a third film stack b3 in the second reflective film 60B are configured to reflect light with a same center wavelength. A third film stack a3 in the first reflective film 60A and a second film stack b2 in the second reflective film 60B are configured to reflect light with a same center wavelength. The fourth film stack a4 in the first reflective film 60A and the first film stack b1 in the second reflective film 60B are configured to reflect light with a same center wavelength. Therefore, the film stacks in the first reflective film 60A and the second reflective film 60B are arranged in reverse orders.

The first film stack a1 in the first reflective film 60A and the fourth film stack b4 in the second reflective film 60B have a same optical thickness and a structure. The second film stack a2 in the first reflective film 60A and the third film stack b3 in the second reflective film 60B have a same optical thickness and a structure. The third film a3 in the first reflective film 60A and the second film stack b2 in the second reflective film 60B have a same optical thickness and a structure. The fourth film stack a4 in the first reflective film 60A and the first film stack b1 in the second reflective film 60B have a same optical thickness and a structure.

The following uses light with four different center wavelengths, blue light c1, green light c2, yellow light c3, and red light c4, as an example to describe how two adjacent reflective films 60 reflect light with different center wavelengths, to implement complementarity.

Still refer to FIG. 7. In the first reflective film 60A, the first film stack a1 is configured to reflect blue light c1 with a center wavelength of 440 nm, the second film stack a2 is configured to reflect green light c2 with a center wavelength of 550 nm, the third film stack a3 is configured to reflect yellow light c3 with a center wavelength of 570 nm, and the fourth film stack a4 is configured to reflect red light c4 with a center wavelength of 660 nm.

Still refer to FIG. 7. In the second reflective film 60B, the first film stack b1 is configured to reflect the red light c4 with a center wavelength of 660 nm, the second film stack b2 is configured to reflect the yellow light c3 with a center wavelength of 570 nm, the third film stack b3 is configured to reflect the green light c2 with a center wavelength of 550 nm, and the fourth film stack b4 is configured to reflect the blue light c1 with a center wavelength of 440 nm.

It can be learned that, an i^{th} film stack in the first reflective film 60A and an n^{th} film stack in the second reflective film 60B reflect light with a same center wavelength, and the i^{th} film stack and the n^{th} film stack have a same optical thickness. In this case, m=4, i+n=5, i≤4, n≤4, and i and n are positive integers. For example, when i=1 and n=4, the first film stack a1 in the first reflective film 60A and the fourth film stack b4 in the second reflective film 60B reflect the blue light c1 with a same center wavelength, and the first film stack a1 and the fourth film stack b4 have a same optical thickness.

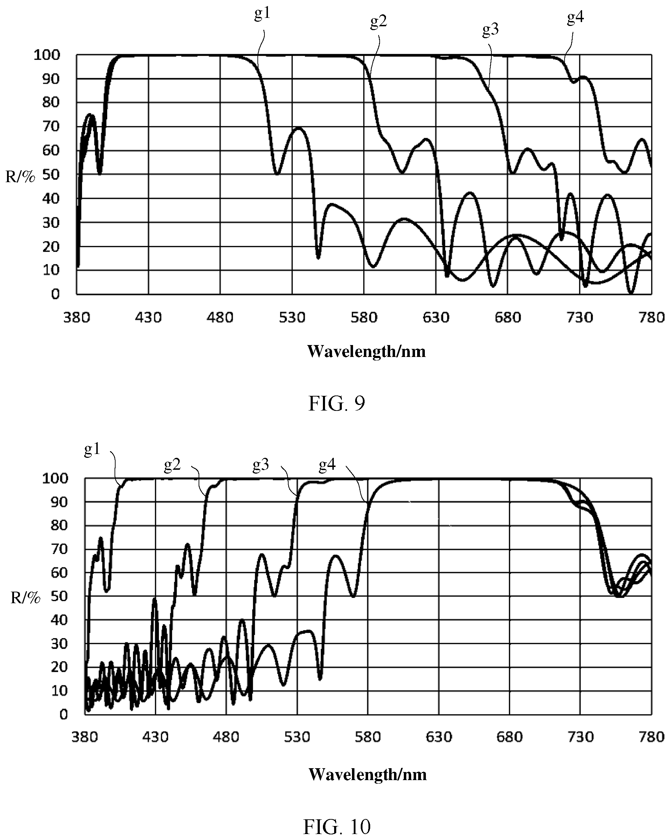

FIG. 9 is a curve diagram of reflectances of a first reflective film in FIG. 7 for different centers. In FIG. 9, R represents a reflectance, g1 represents a reflectance curve of the first reflective film 60A for the blue light c1, g2 represents a reflectance curve of the first reflective film 60A for the green light c2, g3 represents a reflectance curve of the first reflective film 60A for the yellow light c3, and g4 represents a reflectance curve of the first reflective film 60A for the red light c4.

In a process in which the first reflective film 60A in FIG. 7 reflects light with different center wavelengths, with reference to FIG. 9, the blue light c1 is reflected by the first film stack a1 in the first reflective film 60A, the green light c2 is reflected by the first film stack a1 and the second film stack a2 in the first reflective film 60A, the yellow light c3 is reflected by the first film stack a1, the second film stack a2, and the third film stack a3 in the first reflective film 60A, and the red light c4 is reflected by the first film stack a1, the second film stack a2, the third film stack a3, and the fourth film stack a4 in the first reflective film 60A. It can be learned that the light with different center wavelengths has an optical path difference after passing through the first reflective film 60A. For example, an optical path difference between the red light c4 and the green light c2 on the first reflective film 60A is the second film stack a2 and the third film stack a3.

It may be understood that, the first film stack a1 in the first reflective film 60A may reflect light with various center wavelengths, and reflect all the corresponding blue light c1 with the center wavelength of 440 nm, so that light with various center wavelengths other than the blue light c1 arrives at the second film stack a2. Similarly, it can be learned that the second film stack a2 in the first reflective film 60A may reflect the light with various center wavelengths other than the blue light c1, and reflect all the corresponding green light c2 with the center wavelength of 550 nm under a joint action of the first film stack a1 and the second film stack a2. The third film stack a3 in the first reflective film 60A may reflect light with various center wavelengths other than the blue light c1 and the green light c2, and reflect all the corresponding yellow light c3 with the center wavelength of 570 nm under a joint action of the first film stack a1, the second film stack a2, and the third film stack a3. The fourth film stack a4 in the first reflective film 60A may reflect light with various center wavelengths other than the blue light c1, the green light c2, and the yellow light c3, and reflect all the corresponding red light c4 with the center wavelength of 660 nm under a joint action of the first film stack a1, the second film stack a2, the third film stack a3, and the fourth film stack a4. Therefore, the light with different center wavelengths has the optical path difference after passing through the first reflective film 60A.

FIG. 10 is a curve diagram of reflectances of a second reflective film for different center wavelengths. In FIG. 10, R represents a reflectance, g1 represents a reflectance curve of the second reflective film 60B for the blue light c1, g2 represents a reflectance curve of the second reflective film 60B for the green light c2, g3 represents a reflectance curve of the second reflective film 60B for the yellow light c3, and g4 represents a reflectance curve of the second reflective film 60B for the red light c4.

In a process in which the second reflective film 60B in FIG. 7 reflects light with different center wavelengths, with reference to FIG. 10, the blue light c1 is reflected by the first film stack b1, the second film stack b2, the third film stack b3, and the fourth film stack b4 in the second reflective film 60B, the green light c2 is reflected by the first film stack b1, the second film stack b2, and the third film stack b3 in the second reflective film 60B, the yellow light c3 is reflected by the first film stack b1 and the second film stack b2 in the second reflective film 60B, and the red light c4 is reflected by the first film stack b1 in the second reflective film 60B. It can be learned that the light with different center wavelengths has an optical path difference after passing through the second reflective film 60B. For example, an optical path difference between the red light c4 and the green light c2 is the second film stack b2 and the third film stack b3.

It may be understood that, the first film stack in the second reflective film 60B may reflect light with various center wavelengths, and reflect all the corresponding red light c4 with the center wavelength of 660 nm, so that light with various center wavelengths other than the red light c4 arrives at the second film stack b2. Similarly, it can be learned that the second film stack b2 in the second reflective film 60B may reflect the light with various center wavelengths other than the red light c4, and reflect all the corresponding yellow light c3 with the center wavelength of 570 nm under a joint action of the first film stack b1 and the second film stack b2. The third film stack b3 in the second reflective film 60B may reflect light with various center wavelengths other than the red light c4 and the yellow light c3, and reflect all the corresponding green light c2 with the center wavelength of 550 nm under a joint action of the first film stack b1, the second film stack b2, and the third film stack b3. The fourth film stack b4 in the second reflective film 60B may reflect light with various center wavelengths other than the red light c4, the green light c2, and the yellow light c3, and reflect all the corresponding blue light c1 with the center wavelength of 440 nm under a joint action of the first film stack b1, the second film stack b2, the third film stack b3, and the fourth film stack b4. It can be learned that the light with different center wavelengths has the optical path difference after passing through the second reflective film 60B.

With reference to FIG. 9 and FIG. 10, it can be learned that the optical path difference between the red light c4 and the green light c2 on the first reflective film 60A is the second film stack a2 and the third film stack a3, and the optical path difference between the red light c4 and the green light c2 is the second film stack b2 and the third film stack b3. An optical thickness of the second film stack a2 in the first reflective film 60A is the same as an optical thickness of the third film stack b3 in the second reflective film 60B. An optical thickness of the second film stack a3 in the first reflective film 60A is the same as an optical thickness of the third film stack b2 in the second reflective film 60B. Therefore, the optical path difference between the red light c4 and the green light c2 on the first reflective film 60A is the same as an absolute value of the optical path difference between the red light c4 and the green light c2 on the second reflective film 60B.

With reference to FIG. 7, it can be learned that, the film stacks in the first reflective film 60A and the second reflective film 60B are arranged in reverse orders, so that the optical path difference between the red light c4 and the green light c2 on the second reflective film 60B is a negative number. In this case, a sum of the optical path difference between the red light c4 and the green light c2 on the first reflective film 60A and the optical path difference between the red light c4 and the green light c2 on the second reflective film 60B is equal to zero. Therefore, optical paths of light with any center wavelength that passes through the two adjacent reflective films 60 are the same, so that optical path differences of light with any two center wavelengths that passes through the two adjacent reflective films 60 are the same. Further, the optical path differences of the light with any two center wavelengths that passes through the two adjacent reflective films 60 are zero. In this way, light with different center wavelengths does not deflect when passing through the two adjacent reflective films 60, and no dispersion phenomenon occurs.

It may be understood that, the sum of the optical path difference between the red light c4 and the green light c2 on the first reflective film 60A and the optical path difference between the red light c4 and the green light c2 on the second reflective film 60B=A+(-B). A=B, A is the optical path difference between the red light c4 and the green light c2 on the first reflective film 60A, and B is the optical path difference between the red light c4 and the green light c2 on the second reflective film 60B. Because the film stacks in the first reflective film and the second reflective film 60B are arranged in reverse orders, an optical path difference between the red light c4 and the green light c2 that passes through one of the two adjacent reflective films 60 is a positive value, and an optical path difference between the red light c4 and the green light c2 that passes through the other reflective film 60 is a negative value. Therefore, A is a positive number and B is a negative number, or A is a negative number and B is a positive number.

When a quantity of non-total internal reflection surfaces is even, a sum of optical path differences of light with any two center wavelengths after passing through the reflective films 60 on all the non-total internal reflection surfaces is zero, thereby eliminating dispersion. In this case, a reflectance of each film stack for light with a corresponding center wavelength is greater than 80%, so that the reflectance of the reflective film 60 is high, and the transmittance of the prism 50 can be improved. In addition, an angle of the prism 50 may be decoupled from the dispersion, so that the prism 50 may be at any angle.

When the quantity of non-total internal reflection surfaces is odd, a sum of optical path differences of light with any two center wavelengths after passing through the reflective films 60 on all the non-total internal reflection surfaces decreases, thereby effectively mitigating dispersion. In this case, a reflectance of each film stack for light with a corresponding center wavelength is greater than 80%, so that the reflectance of the reflective film 60 is high, and the transmittance of the prism 50 can be improved. In addition, an angle of the prism 50 may be decoupled from the dispersion, so that the prism 50 may be at any angle.

It should be noted that, positions of the first reflective film 60A and the second reflective film 60B in FIG. 7 may also be interchanged, so that dispersion can also be mitigated or eliminated, to achieve same effect. Specifically, the first reflective film 60A may alternatively be disposed on the second non-total internal reflection surface 52, and the second reflective film 60B is disposed on the first non-total internal reflection surface 51. The first film stack a1 in the first reflective film 60A is closest to the second non-total internal reflection surface 52, and the fourth film stack a4 in the first reflective film 60A is farthest from the second non-total internal reflection surface 52. The first film stack b1 in the second reflective film 60B is closest to the first non-total internal reflection surface 51, and the fourth film stack b4 in the second reflective film 60B is farthest from the first non-total internal reflection surface 51.

When the first reflective film 60A is disposed on the second non-total internal reflection surface 52, in the first reflective film 60A, the first film stack a1 is configured to reflect the red light c4 with a center wavelength of 660 nm, the second film stack a2 is configured to reflect the yellow light c3 with a center wavelength of 570 nm, the third film stack a3 is configured to reflect the green light c2 with a center wavelength of 550 nm, and the fourth film stack a4 is configured to reflect the blue light c1 with a center wavelength of 440 nm. In this case, a curve diagram of reflectances of the first reflective film 60A for light with various center wavelengths is the same as that in FIG. 10.

When the second reflective film 60B is disposed on the first non-total internal reflection surface 51, in the second reflective film 60B, the first film stack b1 is configured to reflect the blue light c1 with a center wavelength of 440 nm, the second film stack b2 is configured to reflect the green light c2 with a center wavelength of 550 nm, the third film stack b3 is configured to reflect the yellow light c3 with a center wavelength of 570 nm, and the fourth film stack b4 is configured to reflect the red light c4 with a center wavelength of 660 nm. In this case, a curve diagram of reflectances of the second reflective film 60B for the light with various center wavelengths is the same as that in FIG. 9.

In some possible implementations, optical thicknesses of any two film stacks are different. For example, as shown in FIG. 6, optical thicknesses of the four film stacks in the reflective film 60 are different. In this way, a quantity of film stacks can be reduced, helping reduce a thickness of the reflective film 60.

It should be noted that any two film stacks in the reflective film 60 have different optical thicknesses. Alternatively, in some implementations, a part of film stacks in the reflective film 60 may have a same optical thickness, and the other part of the film stacks may have different optical thicknesses.

In some possible implementations, the reflectance of each film stack for the reflected light with the center wavelength is greater than or equal to 98%, to further improve the reflectance of the reflective film 60 for light, thereby further improving a transmittance of the folding element 11.

For example, as shown in FIG. 6, reflectances of all the four film stacks in the reflective film 60 for reflected light with a center wavelength are greater than or equal to 98%.

It should be noted that, the reflectance of each film stack in the reflective film 60 for the reflected light with the center wavelength is set to be greater than or equal to 98%. Alternatively, a reflectance of a part of film stacks in the reflective film 60 for reflected light with a center wavelength may be set to be greater than or equal to 98%, and a reflectance of the other part of the film stacks for the reflected light with the center wavelength may be set to be greater than 80% and less than 98%. For example, the reflective film 60 includes four film stacks, where reflectances of three film stacks for reflected light with a center wavelength are greater than or equal to 98%, and a reflectance of the remaining film stack for the reflected light with the center wavelength is greater than 80% and less than 98%.

In some possible implementations, at least two film stacks in the reflective film 60 have a same quantity of film layers. For example, as shown in FIG. 6, there are four film stacks, and each film stack includes six film layers. However, a quantity of film stacks with a same quantity of film layers may alternatively be less than four. For example, three of the four film stacks include six film layers, and the remaining one film stack includes five film layers.

In some other possible implementations, any two film stacks in the reflective film 60 may alternatively have different quantities of film layers. For example, the reflective film 60 includes four film stacks. A first film stack may include two film layers, a second film stack may include three film layers, a third film stack may include four film layers, and a fourth film stack may include five film layers.

In some possible implementations, a quantity of film layers in at least one film stack may be greater than or equal to 2 and less than or equal to 50. For example, as shown in FIG. 6, a quantity of film layers in each film stack is greater than 2 and less than 20. In this way, when a difference between refractive indexes of two adjacent film layers is large, a high reflectance is implemented, and a physical thickness of the film stack is reduced.

In some possible implementations, an absolute value of a difference between refractive indexes of two adjacent film layers in at least one film stack in the reflective film 60 is greater than or equal to 0.6. In this way, when a quantity of film layers is fixed, the reflectance of the film stack for the reflected light with the center wavelength may be further improved, helping improve the reflectance of the reflective film 60 for the light.

For example, as shown in FIG. 6, an absolute value of a difference between refractive indexes of two adjacent film layers in the four film stacks in the reflective film 60 is greater than or equal to 0.6. However, in some implementations, in the four film stacks in the reflective film 60, an absolute value of a difference between refractive indexes of two adjacent film layers in one part may alternatively be set to be greater than or equal to 0.6, and an absolute value of a difference between refractive indexes of two adjacent film layers in the other part may be set to be less than 0.6.

It should be noted that the absolute value of the difference between the refractive indexes of the two adjacent film layers in the at least one film stack in the reflective film 60 may alternatively be less than 0.6.

In this embodiment of this application, each film stack in the reflective film 60 includes at least two film layers with different refractive indexes. In some implementations, the at least two film stacks in the reflective film 60 each include two film layers with different refractive indexes, so that a structure of the film stack can be simplified, helping reduce stacking difficulty of the film stack. In some other implementations, the at least one film stack in the reflective film 60 may alternatively include at least three film layers with different refractive indexes.

For example, as shown in FIG. 6, the reflective film 60 includes the first film stack 61, the second film stack 62, the third film stack 63, and the fourth film stack 64. The first film stack 61 includes a first film layer 611 and a second film layer 612 that have different refractive indexes. The second film stack 62 includes a third film layer 621 and a fourth film layer 622 that have different refractive indexes. The third film stack 63 includes a fifth film layer 631 and a sixth film layer 632 that have different refractive indexes. The fourth film stack 64 includes a seventh film layer 641 and an eighth film layer 642 that have different refractive indexes.

In this embodiment of this application, a material with a refractive index is greater than or equal to 1.6 is defined as a high refractive index material, for example, a metal oxide or a metal nitride with a refractive index greater than or equal to 1.6, such as a metal oxide including Ti/Ta. A material with a refractive index less than 1.6 is defined as a low refractive index material, for example, a metal oxide or a metal fluoride with a refractive index less than 1.6, such as SiO2, Al2O3, and MgF2.

A material of each film layer in the film stack is not limited herein. In some implementations, a refractive index of each film layer in the film stack is greater than or equal to 1.6. In other words, the film stack may be made of at least two high refractive index materials. In some other implementations, a refractive index of each film layer in the film stack is less than 0.6. In other words, the film stack may be made of at least two low refractive index materials. In some other implementations, a refractive index of a part of film layers in the film stack is greater than or equal to 1.6, and a refractive index of the other part of the film layers is less than 1.6. In other words, the film stack may be made of at least one high refractive index material and at least one low refractive index material.

In some possible implementations, a refractive index of each film layer in each film stack in the reflective film 60 is greater than or equal to 1.6, so that each film stack in the reflective film 60 is made of the high refractive index material.

In some other possible implementations, a refractive index of each film layer in a part of film stacks in the reflective film 60 is greater than or equal to 1.6, a refractive index of a part of film layers in the other part of the film stacks is greater than or equal to 1.6, and a refractive index of the other part of the film layers is less than 1.6. In this way, in the reflective film 60, the part of the film stacks is made of the high refractive index material, and the other part of the film stacks is made of the high refractive index material and the low refractive index material.

In some other possible implementations, a refractive index of each film layer in each film stack in the reflective film 60 is less than 1.6, so that each film stack in the reflective film 60 is made of the low refractive index material.

In some other possible implementations, a refractive index of a part of film layers in each film stack of the reflective film 60 is greater than or equal to 1.6, and a refractive index of the other part of the film layers is less than 1.6, so that each film stack of the reflective film 60 is made of the high refractive index material and the low refractive index material.

In conclusion, the plurality of film stacks in the reflective film 60 may be made of the high refractive index material, or the plurality of film stacks in the reflective film 60 may be made of the low refractive index material and the high refractive index material, or the plurality of film stacks in the reflective film 60 may be made of the low refractive index material.

It should be noted that a film stack to which each film layer belongs may be determined based on a refractive index of the film layer and a change in a thickness of the plurality of film layers. Certainly, a film stack to which each film layer belongs may alternatively be determined in another manner.

For example, as shown in FIG. 6, the reflective film 60 includes the first film stack 61, the second film stack 62, the third film stack 63, and the fourth film stack 64. The first film stack 61 includes a first film layer 611 and a second film layer 612 that have different refractive indexes. A plurality of first film layers 611 have a same thickness, and a plurality of second film layers 612 have a same thickness. The second film stack 62 includes a third film layer 621 and a fourth film layer 622 that have different refractive indexes. A plurality of third film layers 621 are of a same thickness, and a plurality of fourth film layers 622 are of a same thickness. The third film stack 63 includes a fifth film layer 631 and a sixth film layer 632 that have different refractive indexes. A plurality of fifth film layers 631 have a same thickness, and a plurality of sixth film layers 632 have a same thickness. The fourth film stack 64 includes a seventh film layer 641 and an eighth film layer 642. A plurality of seventh film layers 641 have a same thickness, and a plurality of eighth film layers 642 have a same thickness. It can be learned that, in a same film stack, film layers with a same refractive index have a same thickness. Therefore, a film stack to which a film layer belongs may be determined based on a thickness change of the film layer.

Limited by an error during manufacturing of the film layer, thicknesses of film layers with a same refractive index in a same film stack are not completely the same, and an error may exist. For example, if a thickness fluctuation of film layers with a same refractive index≤±5%, it is considered that the film layers are in a same film stack. If a thickness fluctuation of film layers with a same refractive index exceeds this range, it is considered that the film layers are in different film stacks.

In this embodiment of this application, a thickness of the film layer is not limited herein. The thickness of the film layer may include but is limited to 1 nm, 2 nm, 5 nm, 10 nm, 50 nm, 100 nm, 180 nm, 200 nm, or the like.

In some possible implementations, a thickness of a film layer that is in at least one film stack and whose refractive index is greater than or equal to 1.6 is greater than or equal to 80 nm and less than or equal to 150 nm. It may be understood that, the thickness of the film layer whose refractive index is greater than or equal to 1.6 is set between 80 nm to 150 nm, which means that a thickness of the high refractive index material is limited between 80 nm to 150 nm. In this way, when the quantity of film layers is fixed, the reflectance of the film stack can be further improved.

In some possible implementations, a thickness of a film layer that is in the at least one film stack and whose refractive index is less than 1.6 is greater than or equal to 100 nm and less than or equal to 180 nm. It may be understood that, the thickness of the film layer whose refractive index is less than 1.6 is set between 100 nm to 180 nm, which means that a thickness of the low refractive index material is limited between 100 nm to 180 nm. In this way, when the quantity of film layers is fixed, the reflectance of the film stack can be further improved.

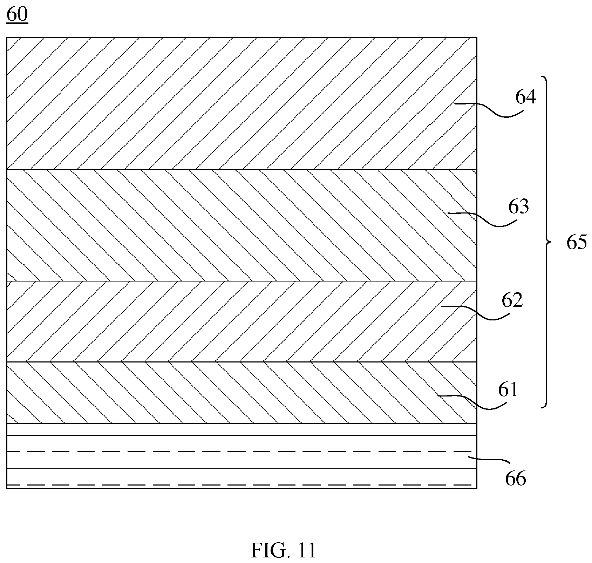

In the foregoing content, the reflective film 60 is a dielectric film. In this case, the dielectric film includes a plurality of film stacks that are stacked, as shown in FIG. 6. However, in some implementations, the reflective film 60 may alternatively be a metal film. In this case, the metal film also includes a plurality of film stacks that are stacked. In some other implementations, the reflective film 60 may alternatively be a metal-dielectric film. In this case, as shown in FIG. 11, the metal-dielectric film includes a metal layer 66 and a dielectric layer 65. The dielectric layer 65 includes a plurality of film stacks that are stacked, and the dielectric layer 65 is disposed between the metal layer 66 and the prism 50. FIG. 11 is a cross-sectional diagram of another reflective film according to an embodiment of this application.

It should be noted that, when the reflective film 60 is a metal film, because the metal film is made of a metal material, and the metal material has an absorption characteristic, dispersion can be mitigated. Therefore, the complementary reflective films 60 are mainly configured to improve the transmittance of the prism 50. When the reflective film 60 is a metal-dielectric film, the complementary reflective films 60 can well balance the transmittance and the dispersion, achieving a high transmittance while and mitigating or eliminating dispersion.

The plurality of reflective films 60 in the folding element 11 are of a same type. For example, as shown in FIG. 4, the two reflective films 60 are both dielectric films. However, the folding element 11 may alternatively have a plurality of different types of reflective films 60.

In some implementations, at least one of the plurality of reflective films 60 in the folding element 11 may be set as a dielectric film, and the remaining reflective films 60 may be set as dielectric films or metal-dielectric films. For example, there are two reflective films 60, one of the two reflective films 60 is a dielectric film, and the other is a metal film or metal-dielectric film.

In some other implementations, a first part of the plurality of reflective films 60 in the folding element 11 may alternatively be set as a dielectric film, a second part of the plurality of reflective films 60 may be set as a metal film, and a third part of the plurality of reflective films 60 may be set as a metal-dielectric film. For example, there are three reflective films 60. In this case, a first reflective film 60 is a dielectric film, a second reflective film 60 is a metal film, and a third reflective film 60 is a metal-dielectric film.

In some other implementations, a part of the plurality of reflective films 60 in the folding element 11 may alternatively be set as a dielectric film, and the other part of the plurality of reflective films 60 may be set as a metal-dielectric film.

In the descriptions of embodiments of this application, it should be noted that, unless otherwise clearly specified and limited, the term "mounting", "connection to", or "connection" should be understood in a broad sense, for example, may be fastening, or may be an indirect connection through an intermediate medium, or may be internal communication between two elements or an interaction relationship between two elements. A person of ordinary skill in the art may understand specific meanings of the foregoing terms in embodiments of this application based on specific cases.

In embodiments of this application, it is implied that an apparatus or element in question needs to have a particular orientation, or needs to be constructed and operated in a particular orientation. Therefore, such terms should not be understood as a limitation on embodiments of this application. In the descriptions of embodiments of this application, unless otherwise exactly and specifically ruled, "a plurality of" means two or more.

In the specification, claims, and accompanying drawings of embodiments of this application, the terms "first", "second", "third", "fourth", and the like (if any) are intended to distinguish between similar objects but do not necessarily indicate a specific order or sequence. It may be understood that data used in such a way is interchangeable in proper circumstances, so that embodiments of this application described herein can be implemented in other sequences than the sequence illustrated or described herein. In addition, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In a formula, the character "/" indicates a "division" relationship between the associated objects.

It may be understood that various numbers in embodiments of this application are merely used for differentiation for ease of description, and are not used to limit the scope of embodiments of this application.

## Claims

1. A reflective film, comprising a plurality of film stacks that are stacked, wherein
optical thicknesses of two adjacent film stacks are different, the two adjacent film stacks are configured to reflect light with different center wavelengths, a reflectance of each film stack for reflected light with a center wavelength is greater than or equal to 80%, each film stack comprises a plurality of film layers that are stacked, and refractive indexes of two adjacent film layers are different.

2. The reflective film according to claim 1, wherein an absolute value of a difference between the refractive indexes of the two adjacent film layers in at least one film stack is greater than or equal to 0.6.

3. The reflective film according to claim 1 or 2, wherein the reflectance of each film stack for the reflected light with the center wavelength is greater than or equal to 98%.

4. The reflective film according to any one of claims 1 to 3, wherein a refractive index of each film layer in the at least one film stack is greater than or equal to 1.6.

5. The reflective film according to any one of claims 1 to 4, wherein a refractive index of each film layer in the at least one film stack is less than 1.6.

6. The reflective film according to any one of claims 1 to 5, wherein a refractive index of a part of the film layers in the at least one film stack is greater than or equal to 1.6, and a refractive index of the other part of the film layers is less than 0.6.

7. The reflective film according to any one of claims 1 to 6, wherein a thickness of the film layer with the refractive index greater than or equal to 1.6 in the at least one film stack is greater than or equal to 80 nm and less than or equal to 150 nm.

8. The reflective film according to any one of claims 1 to 7, wherein a thickness of the film layer with the refractive index less than 1.6 in the at least one film stack is greater than or equal to 100 nm and less than or equal to 180 nm.

9. The reflective film according to any one of claims 1 to 8, wherein at least two film stacks each comprise two film layers with different refractive indexes.

10. The reflective film according to any one of claims 1 to 9, wherein optical thicknesses of any two film stacks are different.

11. The reflective film according to any one of claims 1 to 10, wherein the reflective film is a dielectric film; or
the reflective film is a metal film; or
the reflective film is a metal-dielectric film, and the metal-dielectric film comprises a metal layer and a dielectric layer that comprises the plurality of film stacks.

12. A folding element, comprising a prism and a plurality of reflective films according to any one of claims 1 to 11, wherein
the prism has a plurality of non-total internal reflection surfaces configured to reflect light, and one reflective film is disposed on each non-total internal reflection surface; and
any two reflective films have a same quantity of film stacks, and along a path of light passing through the plurality of non-total internal reflection surfaces, in two adjacent reflective films, an i^{th} film stack from the prism to air in one reflective film is configured to reflect light with a center wavelength of λ1, an n^{th} film stack from the prism to the air in the other reflective film is configured to reflect light with a same center wavelength of λ2, λ1 and λ2 are the same, and the i^{th} film stack and the n^{th} film stack have a same optical thickness, wherein i+n=m+1, i≤m, n≤m, i, n, and m are all positive integers, and m is the quantity of film stacks in each reflective film.

13. The folding element according to claim 12, wherein the prism has an even number of non-total internal reflection surfaces.

14. The folding element according to claim 12 or 13, wherein each reflective film is a dielectric film or a metal film.

15. The folding element according to claim 12 or 13, wherein the reflective film is a metal-dielectric film, and the metal-dielectric film comprises a metal layer and a dielectric layer located between the metal layer and the prism.

16. A camera module, comprising an image sensor, a lens, and the folding element according to any one of claims 12 to 15, wherein
the lens and the image sensor are disposed on a same side of the folding element, or the lens and the image sensor are respectively disposed on two opposite sides of the folding element.

17. An electronic device, comprising a housing and the camera module according to claim 16, wherein the camera module is mounted in the housing.
